Europäisches Patentamt

European Patent Office

Office européen des brevets

(11) Publication number: **0 026 818**
A1

# EUROPEAN PATENT APPLICATION

(21) Application number: **80104304.3**

(22) Date of filing: **22.07.80**

(51) Int. Cl.³: **C 10 G 11/18**

---

(30) Priority: **24.07.79 US 60068**

(43) Date of publication of application: **15.04.81**
**Bulletin 81/15**

(84) Designated Contracting States: **FR GB IT**

(71) Applicant: **PHILLIPS PETROLEUM COMPANY, 5th and Keeler, Bartlesville Oklahoma 74004 (US)**

(72) Inventor: **Dale, Glenn Hilburn, 2900 Staats Drive, Bartlesville Oklahoma (US)**

(74) Representative: **Dost, Wolfgang, Dr. et al, Patent- u. Rechtsanwälte Pagenberg-Dost-Altenburg Galileiplatz 1, D-8000 München 80 (DE)**

(54) **Process for regulating the addition of passivating agents to a catalytic cracking unit.**

㊼ A method for regulating the addition of a passivating agent to a catalytic cracker and an improved cracking process utilizing said method is provided wherein the concentrations of molecular hydrogen and methane produced as cracked products by the catalytic cracker are monitored and the addition of the passivating agent to the catalytic cracker is adjusted in response thereto.

EP 0 026 818 A1

ACTORUM AG

## Process for regulating the addition of passivating agents

The present invention relates to regulating the addition of passivating agents to a catalytic cracking unit.

In a catalytic cracking unit, a cracking catalyst is contacted with a hydrocarbon feedstock under cracking conditions to produce cracked products. Contaminants in the feedstock, for example, nickel, vanadium and iron, become deposited on the cracking catalyst and at least partially deactivate the catalyst in such a manner that the catalyst cannot be fully reactivated by known techniques. The detrimental effects of these contaminants include increased production of hydrogen, dry gas and coke; decreased activity of the cracking catalyst for converting the hydrocarbon feedstock into cracked products; and decreased selectivity of the cracking catalyst for conversion of the hydrocarbon feedstock into gasoline.

It is known in the art that the detrimental effects of these contaminants can be at least partially mitigated by contacting the catalyst with various treating agents, for example antimony, bismuth, manganese, tin and compounds of such treating agents convertible to the oxide form. The amount of treating agent which must be present with the cracking catalyst in the cracking zone to reduce the detrimental effects of contaminants is generally less than about 2 parts by weight antimony, bismuth, tin or manganese per 100 parts by weight cracking catalyst. The precise amount of treating agent which must be present in the cracking zone along with the cracking catalyst for optimal results is subject to variables which are difficult to monitor such as the character of the regenerated catalyst, the amount and character of the makeup catalyst which is added to the regenerated catalyst, the amount and types of

2

contaminants such as nickel, vanadium and iron present in the hydrocarbon feedstock, the residence time of contaminants in the catalytic cracker, and the character of the particular passivating agent being utilized. Because it is economically wasteful to add either too little or too much passivating agent to the unit, it is extremely desirable to manipulate the addition of passivating agent to the unit in response to easily ascertainable factors so as to maintain an optimal level of treating agent in the catalytic cracking unit at all times. Benefits attributable to optimal levels of treating agent include increased conversion, increased catalyst selectivity to gasoline, increased catalyst life, decreased hydrogen production, and decreased coke production.

### Objects of the Invention

It is thus an object of this invention to provide a means for control of the addition of passivating agent to a catalytic cracking unit.

It is another object of this invention to provide a method for controlling the addition of passivating agent to a catalytic cracking unit so as to maintain an optimal amount of passivating agent in the catalytic cracking unit.

It is another object of this invention to provide a hydrocarbon catalytic cracking process characterized by increased gasoline yield and decreased coke formation.

Further objects, embodiments, advantages and features of this invention will be apparent from the following detailed description of the invention and the appended claims.

### Summary of the Invention

In accordance with the present invention, the addition of a passivating agent to a catalytic cracking unit is manipulated in response to the concentrations of molecular hydrogen and methane produced as cracked products by the unit.

### Brief Description of the Drawings

FIGURE 1 is a schematic of an apparatus suitable for practicing the present invention.

FIGURE 2 is a diagram of the data of the Example described herein illustrating the $H_2/CH_4$ ratio produced by a catalytic cracker processing a specific feedstock as a function of the addition rate of passivating agent.

## Detailed Description of the Invention

In accordance with the present invention it has been found that the concentrations of molecular hydrogen and methane produced by a catalytic cracking unit is useful in determining the proper amount of passivating agent which should be added to the catalytic cracking unit in order to obtain optimal results.

Although not to be limited thereto, a preferred method of conducting a catalytic cracking process is by fluid catalytic cracking using riser outlet temperatures between about 900° and 1100°F (482° to 593°C), preferably between 940° and 1020°F (504° to 549°C). The invention will hereinafter be described as it relates to a fluid catalytic cracking process although those skilled in the art will readily recognize that the invention is equally applicable to other catalytic cracking processes, for example, those employing moving beds or fixed catalyst beds.

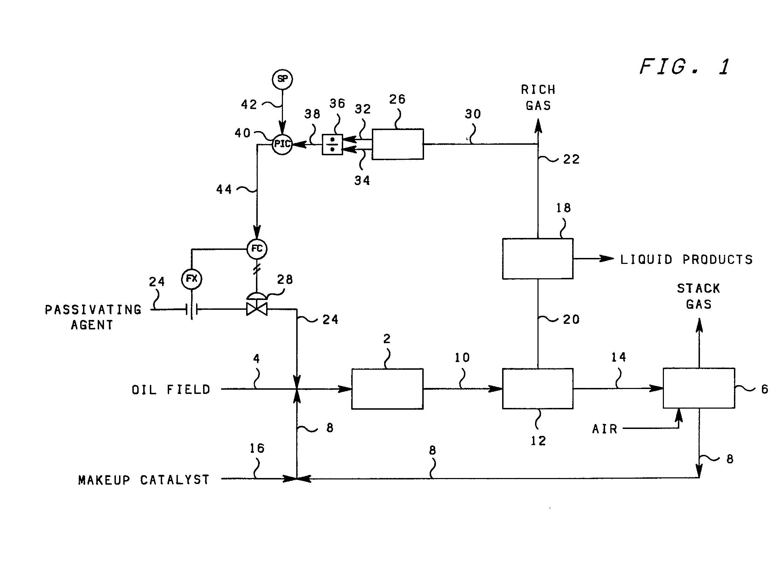

With reference to FIGURE 1, the cracking occurs in the presence of a fluidized composited catalyst in a cracking zone 2 comprised of an elongated reactor tube commonly referred to as a riser. A hydrocarbon feedstock 4 is passed through a preheater which heats the feedstock to a temperature of about 350° to 750°F (177 to 399°C), preferably between about 550° to 650°F (287°-343°C) and the heated feed is then charged to the bottom of the riser for contact with the cracking catalyst. Generally, the riser has a length-to-diameter ratio of between about 20 and 40. Preferably, the length of the riser is sufficient to provide for a residence time of catalyst and feedstock of from about 1 to 4 seconds.

Most any cracking catalyst can be employed in the cracking process. Some examples of cracking catalysts which can be employed for catalytic cracking include for example those obtained by admixing an inorganic oxide gel with an aluminosilicate and aluminosilicate compositions which are strongly acidic in character as a result of treatment with a fluid medium containing at least one rare earth metal cation and a hydrogen ion or an ion capable of conversion to a hydrogen ion. Other cracking catalyst compositions which can be employed in the process of this invention include crystalline aluminosilicate zeolites having a mordenite crystal structure. It is believed the present invention is applicable to any cracking process utilizing a cracking catalyst which becomes at least partially deactivated by contaminants in the feedstock and can be at least partially reactivated by contact with a treating agent, for example, zeolite-containing cracking catalysts.

4

As an integral step in a fluid catalytic cracking process, the cracking catalyst is regenerated by heating the catalyst to elevated temperatures, generally in the range of from about 800° to about 1600°F (427° to 871°C) preferably 1150° to 1350°F (621° to 732°C) for a period of time ranging from about 3 to about 30 minutes in the presence of a free oxygen-containing gas, such as air. This step is carried out in a catalyst regeneration zone 6 and is conducted so as to reduce the concentration of carbon on the catalyst to less than about 0.3 weight percent. At least a portion of the thus regenerated catalyst is removed from the regeneration zone via 8 and charged to the bottom of the riser for contact with the hydrocarbon feedstock.

In the catalytic cracking operation, a contact time in the riser between catalyst and hydrocarbon feedstock of about 1 to 4 seconds and catalyst:oil weight ratios of about 4:1 to about 15:1 are usually employed. Steam can be introduced into the oil inlet line to the riser and/or introduced independently to the bottom of the riser so as to assist in carrying regenerated catalyst upwardly through the riser. Regenerated catalyst is introduced into the bottom of the riser at temperatures generally between about 1100° and 1350°F (593° to 732°C). The riser system at a pressure in the range of about 5 to about 50 psig (0.35 to 3.50 kg/cm$^2$) preferably 15 to 35 psig (1.05 to 2.45 kg/cm$^2$) is normally operated with catalyst and hydrocarbon feed flowing concurrently into and upwardly into the riser at about the same flow velocity preferably avoiding any significant slippage of catalyst relative to hydrocarbon in the riser and avoiding formation of a catalyst bed in the reaction flow stream. In some systems, however, the catalyst:oil ratio varies significantly from the riser inlet along the reaction flow stream. The riser temperature drops along the riser length due to vaporization of the feed, the slightly endothermic nature of the cracking reaction, and heat loss to the atmosphere. As nearly all the cracking occurs within one or two seconds, it is necessary that feed vaporization occurs nearly instantaneously upon contact of feed and regenerated catalyst at the bottom of the riser. Therefore, at the riser inlet the hot regenerated catalyst and preheated feed generally together with a mixing agent such as steam (as heretofore described), nitrogen, ethane or light gas preferably other than methane or hydrogen are intimately admixed to achieve an equilibrium temperature nearly instantaneously.

5

After the cracking reaction, the reaction mixture is transported from the riser via 10 and the catalyst is separated from the hydrocarbon product effluent in a catalyst separation zone 12. The separated catalyst is transported to the catalyst regeneration zone 6 via line 14 for regeneration in the hereinbefore described manner. The regenerated catalyst 8 is usually supplemented with fresh make-up catalyst 16 before being re-introduced into the riser.

The cracked hydrocarbon product effluent is passed from the catalyst separation zone 12 to a product separation zone 18 via line 20 where separation of liquid products and gaseous products occurs. In the product separation zone 18 a higher boiling fraction of the liquid product comprising largely unreacted hydrocarbon feed is usually separated from the remainder of the liquid products by conventional techniques and a portion routed back for charging into the bottom of the riser and recontact with the cracking catalyst. The gaseous products, which contain hydrogen and methane as well as other gases, are withdrawn for further processing via 22.

The passivating agent can be introduced into the cracking zone in a variety of ways. For example, the passivating agent can be introduced directly to the cracking zone 2 either with or without dispersal in an aqueous or non-aqueous carrying agent. The passivating agent can be contacted with the catalyst in the catalyst regenerating zone 6 by means such as impregnation, dry mixing, or deposition from suitable carrying agents and introduced into the cracking zone along with the regenerated catalyst. Yet another method by which the passivating agent can be introduced into the cracking zone is by addition of makeup catalyst 16 containing a suitable percentage of passivating agent. In a preferred embodiment the passivating agent is dispersed in a suitable, non-aqueous solvent, intimately admixed via line 24 with the hydrocarbon feedstock 4 and injected into the cracking zone 2 along with the hydrocarbon feedstock.

In accordance with one embodiment of the present invention, the concentrations of molecular hydrogen to methane produced by the catalytic cracking unit are monitored by suitable means, for example, a gas chromatograph located downstream of the product separation zone, and the rate at which the passivating agent is introduced into the cracking zone is adjusted in response to the monitored concentrations. As these concentrations change, the ratio between molecular hydrogen and methane

6

produced by the catalytic cracker also normally changes. As used herein, the term ratio refers to the volume ratio, although it is to be understood that other ratios, for example, molecular ratios, concentration ratios or weight ratios can be successfully utilized in accordance with the invention. The addition rate of passivating agent to the cracking unit can be adjusted in response to a change in the $H_2/CH_4$ ratio. If the $H_2/CH_4$ ratio should increase, the rate at which passivating agent is added is increased; and if the $H_2/CH_4$ ratio should decrease, the rate at which passivating agent is added to the cracking unit is decreased. The addition rate of passivating agent can be changed simply by manipulating a valve 28 on the passivating agent feedline 24.

In accordance with another embodiment of the invention, the ratio of molecular hydrogen to methane produced by the catalytic cracking unit is maintained constant, or within a preselected range of values by regulating the introduction of passivating agent into the cracking zone. This can be done by regulating the rate with which passivating agent is contacted with the cracking catalyst in, for example, the regeneration zone of the reactor. It is preferable to regulate the introduction of passivating agent to the cracking zone more directly, such as by controlling the flow of passivating agent being introduced directly into the cracking zone or being introduced into the cracking zone while in contact with the hydrocarbon feedstock. Generally, it is believed that the preselected range of values for the $H_2/CH_4$ ratio will be selected from within about 1:5 to about 3:1. In this embodiment, the passivating agent is added to the unit at a recovery rate if the observed $H_2/CH_4$ ratio climbs above the preselected range, at a maintenance rate when the observed ratio is within the preselected range, and at a low rate if the observed ratio should fall below the preselected range. Generally, for a lined out unit, or a unit operating at equilibrium, the maintenance rate will equal the rate at which passivating agent is being lost and/or withdrawn from the system. The recovery rate is a rate which is higher than the maintenance rate, and a low rate is a rate which is lower than the maintenance rate. The amount of passivating agent in the catalyst inventory decays, that is becomes less, as passivating agent is added to the system at a low rate. At a recovery rate, the amount of passivating agent in the catalyst inventory increases. It can be desirable to add passivating agent at a recovery rate when it is anticipated that the rate of contaminant introduction will increase, for example, by introducing

7

oil feed 4 into cracking zone 2 at a higher rate or by utilizing a more heavily contaminated oil feed 4.

In the practice of the preferred embodiment of the invention, the ratio of molecular hydrogen to methane present in the gaseous effluent 22 from the product separation zone 18 is determined by suitable analysis of a portion 30 of the gaseous effluent 22, for example, by conventional means such as a chromatographic analyzer 26. The analyzer 26 is equipped to establish a first signal 32 representative of the concentration of molecular hydrogen in the withdrawn portion of the gaseous effluent and also a second signal 34 representative of the concentration of methane in the withdrawn portion of the gaseous effluent. Computing means 36 divide the first signal by the second signal to establish a third signal 38 representative of the ratio between the concentrations of hydrogen and methane. This third signal 38 is fed to a comparison means 40 such as a process integral controller as is known in the art which compares the third signal 38 with a set point comprised of a fourth signal 42 which is representative of a desired ratio of molecular hydrogen to methane in the gaseous cracked product 22 from the product separation zone 18 in a suitable manner such as by subtracting the third signal 38 from the fourth signal 42 and generates a fifth signal 44 responsive to the third and fourth signals which is used to manipulate a flow controller on the passivating agent feedline and thus regulate the addition of passivating agent to the catalytic cracker.

The desired ratio of molecular hydrogen to methane generated as cracked products will vary among individual systems and must be determined experimentally. Generally, it is believed that the desired ratio will be between about 1:5 and 3:1.

Even units first beginning cracking operations generally employ some portion of used, partially deactivated cracking catalyst. This is because that new cracking catalyst is generally too active to use on a commercial basis. Assuming that at least a portion of the catalyst inventory is used, and that the used cracking catalyst has not been treated with a passivating agent, the desired ratio of molecular hydrogen to methane in the reactor off-gases can be determined in the hereinafter described manner.

The amount of passivating agent needed to offset the detrimental effects of metals contamination in the catalyst inventory is estimated by quantitatively analyzing a portion of the inventory for at least nickel and vanadium content and extrapolating these findings to estimate the total weight of nickel and vanadium in the inventory. The amount of treating agent which must be contacted with the inventory in order to offset the detrimental effects of metals contamination is calculated. This amount is dependent upon the efficiency with which contact is effected between treating agent and contaminated cracking catalyst. For example, one pound of antimony (elemental weight) containing treating agent will effectively passivate about five pounds of nickel plus vanadium on the cracking catalyst. But contact of the antimony treating agent with the cracking catalyst in, for example, the cracking zone of the reactor, is generally only about 50% effective. Thus, about one pound of antimony must be contacted with the contaminated cracking catalyst in order to passivate two and one-half pounds of combined weight nickel and vanadium on the catalyst.

The amount of treating agent necessary to offset the detrimental effects of metals deposited on the cracking catalyst is added to the catalyst inventory over a period of from about 2-7 days. Over this period, the $H_2/CH_4$ ratio in the unit off-gases is monitored. When this ratio is plotted against time on arithmetic coordinates, there will be observed an exponential type curve, with the rate of change of the ratio decreasing with each additional increment of time. Near the end of the 2-7 day period, the ratio should appear to be approaching an asymptotic value. At this point, it is preferable to continue addition of the passivating agent at the same rate for a similarly long additional period of time to note whether excess amounts of passivating agent impair the cracking process such as by decreasing conversion, as evidenced by increasing amounts of cycle oil being produced by the unit and/or by an increasing $H_2/CH_4$ ratio. While reasonable amounts of excess antimony are not detrimental to the cracking process, it is forseen that mixtures of passivating agents or newly discovered passivating agent may be detrimental if present in excessive amounts.

If the above procedure results in an exponential type curve, the desired value for the $H_2/CH_4$ ratio can be set at a value corresponding to between 50 and 100 percent, preferably between 60 and 95 percent, more preferably, between 70 and 90 percent, of the observed decrease in the $H_2/CH_4$ ratio. If desired, a preselected range of values can be selected corresponding to the upper and lower limits of the above described desired values. If the plotted $H_2/CH_4$ ratio exhibits an

increase in value corresponding to the addition of more than optimal amounts of passivating agent or if conversion decreases, the supply of passivating agent should be temporarily reduced and the amount of effective passivating agent in the cracking unit allowed to decay so that the $H_2/CH_4$ ratio again exhibits the minimal value, before the desired set point is selected for the process integral controller as above described and the present invention put into operation. If the $H_2/CH_4$ ratio traces a non-exponential-type curve, a careful cost benefit analysis may have to be undertaken before the proper set point can be wisely selected.

To select a set point for a process in which a passivating agent is currently being employed, the source of passivating agent should be disconnected or, preferably the rate at which passivating agent is being introduced into the process reduced by a value of about 50 percent, and the $H_2/CH_4$ ratio monitored in order to ascertain whether the system contains excess amounts of passivating agent. After a period of a few days, the $H_2/CH_4$ ratio should begin to increase. At this point, large amounts of passivating agent are added to the system such as by increasing the flow rate of passivating agent by about 50 percent, and the ratio at which stabilization occurs is noted. If the above procedure does not result in an increased $H_2/CH_4$ ratio and a stabilized $H_2/CH_4$ ratio, the addition rate of passivating agent can be further reduced or increased by about 50 percent values as required. By stabilization ratio is meant that ratio which appears to be within about 0.02 to about 0.2, preferably within about 0.1 units of the estimated asymptotic value of the $H_2/CH_4$ ratio. The set point is selected from about 0.0 to about 0.5, preferably, about 0.1 to about 0.3 units above the stabilization ratio.

The flow controller utilized in the present invention can be conventional in nature and is preferably located on the passivating agent feedline. The passivating agent feedline is in flow communication with a source of passivating agent and a point of introduction into the catalytic cracking unit. The point at which passivating agent is introduced into the system can be, as previously indicated, in the catalyst regeneration zone or directly into the cracking zone, or between the cracking zone and the regeneration zone or preferably into the hydrocarbon feedstock line. If the passivating agent is added to the hydrocarbon feedline, the amount of passivating agent added to the hydrocarbon feed by weight will normally range from about 1 part per million to 500 parts per million, preferably from 10 to 150 parts per million based upon the elemental weight of the passivating agent and the weight of hydrocarbon feed introduced into the cracking zone. Most any passivating agent can be used in the invention such as, for example, triphenyl bismuthine, manganese naphthenate, bismuth nitrate, bismuth trichloride, manganese nitrate, manganese benzoate, antimony lactate, antimony acetate, antimony trioxide, antimony trichloride, triphenyl antimony and mixtures of any of the above. Hydrocarbyl-substituted antimony compounds are the treating agents presently preferred, especially antimony tris(O,O-dihydrocarbyl phosphorodithioates).

It will be appreciated by those skilled in the art that the introduction of treating agents to the cracking zone will be increased should the ratio of molecular hydrogen to methane present in the gaseous cracked products increase above the preselected set point, or, if said ratio should fall below said preselected set point, it can be desirable to reduce the rate of flow of the treating agent, thereby reducing the introduction of treating agent to the cracking zone.

The feedstocks employed in the catalytic cracking process of this invention are those conventionally utilized in catalytic cracking processes to produce gasoline and light distillate fractions from heavier hydrocarbon feedstocks and generally are those feedstocks having an average boiling point above 600°F (316°C) and include such materials as gas oils, cycle oils, residual oils and the like. The cracking processes to which this invention are applicable are those generally conducted at temperatures between 800° and about 1200°F (427° and 649°C) preferably 940 to 1020°F (504° and 549°C) and at pressures within the range of subatmospheric to 3000 psig (210 kg/cm$^2$).

The following example is presented to illustrate a cracking process in which the present invention could be advantageously utilized.

## Example

A 26,000 bbl/day catalytic cracking unit charging gas oil feed was placed on a metals passivation program using a commercially available oil additive manufactured by the R. T. Vanderbilt Co. of Norwalk, Connecticut under the tradename Vanlube 622 containing about 10.9 weight percent antimony in solution in a neutral hydrocarbon oil. The catalyst employed was a commercial zeolite-type catalyst. Vanlube 622 was introduced into the unit along with the oil feed. Catalyst inventory was 350 tons and makeup was about 7 tons/day. System catalyst analysis was:

| Surface area | 78 $m^2$/gm |
|---|---|
| Nickel | 2892 ppm (wt.) |
| Vanadium | 8005 ppm |
| Iron | 7651 ppm |
| Coke | 0.16% (wt.) |

Oil feed properties were:

| Molar wt. | 414 |
|---|---|
| A.P.I. Gravity | 21.2 |
| BMCI[1] | 49.6 |
| Carbon (wt. %) | 85.02 |
| Carbon Residue | 4.92 (Rams) |
| Sulfur (wt. %) | 1.5 |
| Nickel | 7.4 ppm |
| Vanadium | 12.0 ppm |
| Iron | 45.0 ppm |

(1) Bureau of Mines Correlation Index.

Vanlube 622 was charged to the unit at selected rates until the $H_2/CH_4$ (volume) ratio in the unit off-gases appeared to stabilize. The equilibrium $H_2/CH_4$ ratios as determined by chromatographic anlaysis of unit off-gases at the selected Vanlube 622 feed rates were:

| Vanlube 622 Addition rate, Gal/Hr. | $H_2/CH_4$ ratio of unit off-gas |
|---|---|
| 0 | 2.73 |
| 1.3 | 1.65 |
| 2.8 | 1.50 |

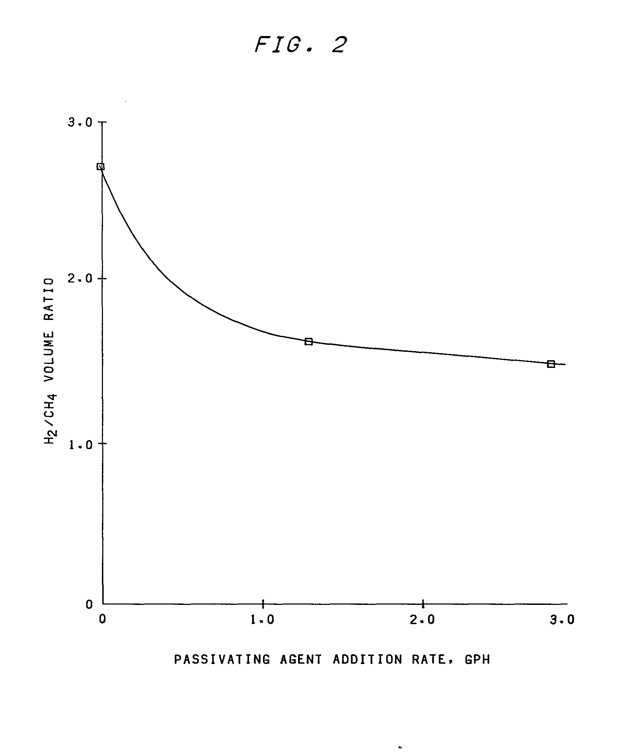

FIGURE 2 is a graphical representation of the above data points fitted with a smooth curve. As can be noted from FIGURE 2, the $H_2/CH_4$ ratio produced by the unit at equilibrium conditions where passivating agent is added to the system at the same rate as it is being lost from the system under otherwise constant operating conditions is a function of the Vanlube 622 addition rate. Furthermore, the relationship between the passivating agent feed rate and the $H_2/CH_4$ ratio follows a decreasing exponential type curve with increasing passivating agent addition rates.

As can be noted from the above data and FIGURE 2, the $H_2/CH_4$ ratio underwent a decrease of about 1.23 units upon the addition of increasing amounts of passivating agent to the unit, appearing to approach an asymptotic value of about 1.5. A set point corresponding to, for example, 70 to 90 percent of the observed decrease in the $H_2/CH_4$

ratio would be between about 1.6 and 1.9. The present invention could be advantageously employed in the above-described process by selecting, for example, 1.6 as the set point representative of the desired $H_2/CH_4$ ratio in the unit off-gases.

Reasonable variations and modifications which will be apparent to those skilled in the art can be made in this invention without departing from the spirit and scope thereof.

CLAIMS:

1. A process for regulating the rate at which a passivating agent is added to a catalytic cracker comprising:

(a) adding a passivating agent at a first rate to a catalytic cracker;

(b) monitoring the concentrations of molecular hydrogen and methane produced by said catalytic cracker; and

(c) adjusting said first rate in response to the monitored concentrations of molecular hydrogen and methane.

2. A process as in claim 1 wherein the monitored concentrations of molecular hydrogen and methane change from a first molecular hydrogen to methane concentration ratio to a second molecular hydrogen to methane concentration ratio.

3. A process as in claim 2 wherein said second ratio is greater than said first ratio and said first rate is adjusted to a greater second rate or wherein said second ratio is less than said first ratio and said first rate is adjusted to a lesser second rate.

4. A process for regulating the introduction of a passivating agent into a catalytic cracker, said method comprising:

(a) establishing a first signal representative of the concentration of molecular hydrogen in a portion of the cracked products from a catalytic cracker;

(b) establishing a second signal representative of the concentration of methane in the portion of the cracked products from said catalytic cracker;

(c) establishing responsive to said first signal and said second signal, a third signal representative of a predetermined relationship between said first signal and said second signal;

(d) establishing a fourth signal representative of a desired value for said predetermined relationship between said first signal and said second signal;

(e) establishing responsive to said third signal and said fourth signal, a fifth signal representative of a predetermined relationship between said third signal and said fourth signal; and

(f) regulating the introduction of passivating agent into the catalytic cracker in response to said fifth signal.

5. A process as in claim 4 wherein the predetermined relationship between said first signal and said second signal is the ratio between said first signal and said second signal and wherein the predetermined relationship between said third signal and said fourth signal is the difference between said third signal and said fourth signal; preferably wherein the desired value for said ratio is in the range of from about 1 : 5 and about 3 : 1; preferably wherein said first signal and said second signal are established by a chromatographic analyzer; preferably wherein said fifth signal is established by a process integral controller; preferably wherein a flow controller regulates the addition of passivating agent to the catalytic cracker in response to said fifth signal.

6. In a process which comprises introducing a hydrocarbon feed, a cracking catalyst and a metals passivation agent into a cracking zone of a catalyst cracking unit under cracking conditions to produce cracked products including molecular hydrogen and methane, the improvement which comprises maintaining the ratio of molecular hydrogen to methane produced by said process within a range of preselected values by regulating the introduction of said metals passivation agent into said cracking zone.

- 15 -

7. A process as in claim 6 wherein said range of preselected values is a range within the range of from about 1 : 5 to about 3 : 1.

8. A process as in claim 6 or 7 wherein at least a portion of said metals passivation agent is introduced directly into said cracking zone or wherein at least a portion of said metals passivation agent is introduced into said cracking zone in contact with at least a portion of said hydrocarbon feed.

9. A process as in claim 6 to 7 wherein at least a portion of said metals passivation agent is introduced into said cracking zone in contact with at least a portion of said cracking catalyst.

10. A process as in one of claims 1 to 9 wherein the metals passivation agent is selected from the group consisting of antimony, bismuth, manganese and compounds thereof convertible to the oxide form thereof.

FIG. 1

2/2

FIG. 2

European Patent
Office

**EUROPEAN SEARCH REPORT**

Application number

EP 80 10 4304

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| A | US - A - 2 850 437 (KELSO) | | C 10 G 11/18 |
| A | US - A - 4 025 458 (McKAY) | | |
| | ---- | | |

**TECHNICAL FIELDS SEARCHED (Int. Cl.³)**

C 10 G 11/18
B 01 J 21/20

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| The Hague | 28-10-1980 | MICHIELS |

EPO Form 1503.1   06.78